Europäisches Patentamt

European Patent Office

Office européen des brevets

(19)

(11) Veröffentlichungsnummer: **0 245 317 B1**

# EUROPÄISCHE PATENTSCHRIFT

(12)

(45) Veröffentlichungstag der Patentschrift: **12.08.92**

(51) Int. Cl.⁵: **B23Q 7/14**, B29C 65/00

(21) Anmeldenummer: **86906275.2**

(22) Anmeldetag: **27.10.86**

(86) Internationale Anmeldenummer:
**PCT/DE86/00432**

(87) Internationale Veröffentlichungsnummer:
**WO 87/02607 (07.05.87 87/10)**

(54) HOCHFREQUENZ-SCHWEISSANLAGE.

(30) Priorität: **26.10.85 DE 3538149**

(43) Veröffentlichungstag der Anmeldung:
**19.11.87 Patentblatt  87/47**

(45) Bekanntmachung des Hinweises auf die
Patenterteilung:
**12.08.92 Patentblatt  92/33**

(84) Benannte Vertragsstaaten:
**AT BE CH DE FR GB IT LI LU NL SE**

(56) Entgegenhaltungen:
DE-A- 1 704 326      DE-A- 1 756 438
DE-A- 2 518 689      DE-A- 2 752 654
DE-B- 1 295 319      FR-A- 2 071 993
FR-A- 2 486 040      GB-A- 884 219
JP-A-50 145 985

G.F. Abele, Hochfrequenzschweisstechnik,
Zechner & Hüthig Verlag GmbH, Speyer am
Rhein (1973), S 501,512-515,524, Abb.713b

(73) Patentinhaber: **OBERMEIER, Hans**
**Breslauer Strasse 43**
**W-8228 Freilassing(DE)**

(72) Erfinder: **OBERMEIER, Hans**
**Breslauer Strasse 43**
**W-8228 Freilassing(DE)**

(74) Vertreter: **Petra, Elke, Dipl.-Ing.**
**Seidlstrasse 25**
**W-8000 München 2(DE)**

EP 0 245 317 B1

## Beschreibung

Die Erfindung bezieht sich auf eine Hochfrequenz-Schweißanlage für die Verschweißung insbesondere von Kunststoffteilen gemäß Oberbegriff des Anspruches 1, wie sie beispielsweise zum Herstellen von Badewanneneinlagen, Kfz-Matten usw. Verwendung finden.

Es sind bereits Hochfrequenz-Schweißanlagen in unterschiedlicher Bauweise bekannt.

So sind Schiebetisch-Anlagen auf dem Markt, die überwiegend aus einer Arbeitsstation und einer oder zwei Beschickungsstationen zusammengesetzt sind. Diese sind mit sogenannten Tabletts ausgestattet, die mit dem Werkstück bzw. mit den Werkstückeinzelteilen versehen aus der jeweiligen Beschickungsstation in die Arbeitsstation geschoben werden. Nachdem der Schweiß-Arbeitsgang durchgeführt ist, wird das Tablett wieder aus der Arbeitsstation in eine der Beschickungsstationen geschoben. Gleichzeitig kann ein bereits beschicktes Tablett aus der zweiten Beschickungsstation in die Arbeitsstation geschoben werden. Es findet hier folglich ein Ein- und Ausfördern beispielsweise aus der ersten Beschickungsstation in die Arbeitsstation und wieder zurück in diese erste Beschickungsstation statt, ohne daß ein kontinuierlicher Fördervorgang im Sinne eines in einer einzigen Richtung Förderns möglich wäre. Zur Bedienung dieser bekannten Anlagen sind je nach Anzahl der Beschickungsstationen mindestens zwei oder vier Bedienungspersonen notwendig, wobei jeweils immer nur eine Arbeitsstation vorhanden ist. Diese bekannte Anlage ist folglich arbeitskraft-intensiv. Zudem ist diese meist nicht beliebig modulartig erweiterbar, um auch weitere Arbeitsschritte dem ersten und einzigen Arbeitsschritt, nämlich dem Schweißen, folgen lassen zu können. Bei Vorhandensein von beispielsweise zwei Beladestationen an einer Arbeitsstation müssen jeweils auch mindestens zwei Arbeitsplätze mit entsprechenden Vorkehrungen, wie beispielsweise Materialablagen für bearbeitetes und unbearbeitetes Material eingerichtet sein. Dies erfordert wieder relativ viel Platz.

Desweiteren sind Hochfrequenz-Schweißeinrichtungen in Form von Rundtischen bzw. Drehtischen bekannt. Diese bestehen im wesentlichen aus einem Rund-oder Drehtisch, der an seinem Umfang mehrere Aufnahmen für die Werkstücke aufweist, wobei die Anzahl der Aufnahmen der Anzahl der vorgesehenen Arbeits-bzw. Bedienungsstationen entspricht. Gewöhnlich weist ein solcher Drehtisch vier Tische bzw. Werkstückaufnahmen auf, die sich gemeinsam um eine Achse drehen. Diese Anordnung bedingt eine sehr große Breite der Anlage, die folglich mindestens die Breite von drei Tischen aufweist. Die Bedienung der Tische bzw. das Beschikken der Werkstückaufnahmen ist immer nur von einer der Breitseiten der jeweiligen Tische möglich. Desweiteren ist hier keine Möglichkeit für eine arbeitskonforme Materialablage oder für eine Bedienung mit Handhabungsgeräten (Roboter) vorgesehen bzw. gegeben. Auch ist die bekannte Drehtisch-Anlage nicht beliebig ausweitbar, da die Anzahl der Stationen von der Konzeptionsphase der Anlage her bereits festgelegt ist. Zusätzliche Arbeitsstationen können nicht nachträglich eingefügt werden. Auch weisen diese Rundtische immer die gleiche Taktzeit auf. Es ist folglich auch je nach Taktzeit immer nur eine relativ geringe Auskühlzeit vorhanden, so daß beispielsweise bei Schweißung mit geschlossenen Deckelwerkzeugen eine ausreichende Kühlzeit nicht bereitgestellt werden kann; außer daß die gesamte Taktzeit auf die Länge dieser Kühlzeit eingestellt wird. Dies wiederum reduziert die Wirtschaftlichkeit der Anlage. Die Erhöhung der Transportgeschwindigkeit ist bei diesen bekannten Drehtisch-Anlagen wegen der vorhandenen Zentrifugalkräfte limitiert. Bei höheren Transportgeschwindigkeiten werden nämlich die miteinander zu verschweißenden Teile, die in der Beschickungsstation genau zueinander angeordnet werden, aus ihrer Anordnung herausgeschleudert.

Auch sind Hochfrequenz-Schweißanlagen bekannt, bei welchen eine kontinuierliche, lineare Förderung der zu verschweißenden Werkstücke durch die hintereinander angeordneten Stationen möglich ist. Diese Anlagen sind entweder, wie in der DE-OS 33 12 418 beschrieben, mit Transportketten ausgestattet, die an ihrer Oberseite Mitnahmen für die zu verschweißenden Kunststoffbahnen aufweisen oder sie besitzen fest an dem Transportsysten befestigte Aufnahme-Tabletts für die miteinander zu verschweißenden Teile. Die fertig bearbeiteten Werkstücke müssen am Ende des Arbeits- bzw. Zuführteiles der Transporteinrichtung dieser entnommen werden, da die Werkstücke andernfalls beim Übergang auf die andern Transporteinrichtungteile (vertikale oder parallel darunter liegende Abschnitte) von den Transportaufnahmen bzw.Tabletts fallen bzw.von diesen heruntergekippt würden. Eine Rückführung der mit den verschweißten Teilen versehenen Tabletts bis zur Ausgangsstation ist hier folglich nicht möglich. Es muß zudem mindestens die doppelte Anzahl von Tabletts als die korrespondiesernde Anzahl von Stationen vorhanden sein, da mindestens soviele unbeladene wie beladene Tabletts im Umlauf sind. Auch bei diesen bekannten Anlagen ist eine feste Taktzeit jeweils in allen Abschnitten der Transporteinrichtung vorhanden. Daher ist eine schnellere Rückführung oder auch die Möglichkeit eines längern Verweilens der Tabletts in einer Auskühlstation nicht möglich.

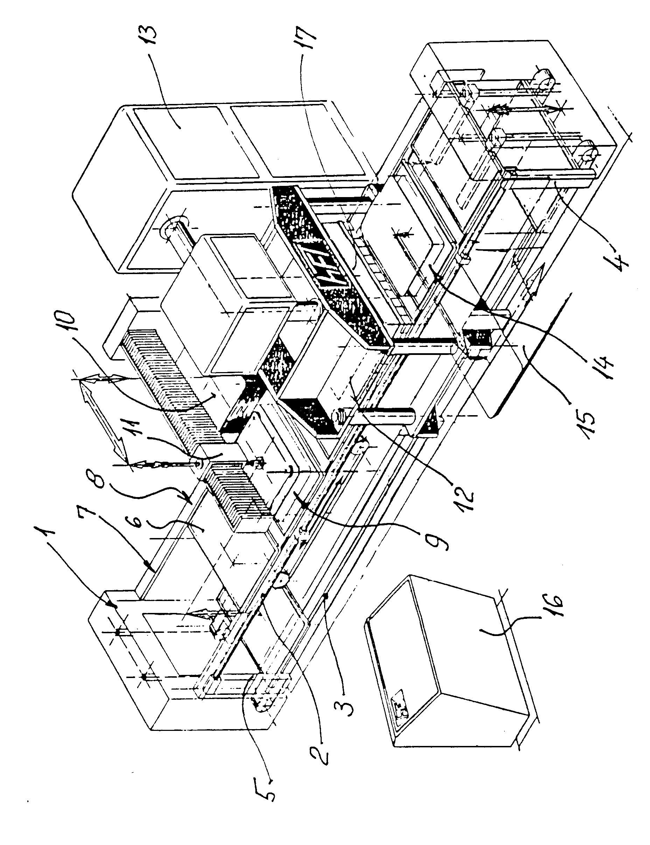

Aus dem Aufsatz von G. F. Abele:" Hochfreqenz-Schweißtechnik", Zechner und Hüthig Verlag GmbH, Speyer (1973), Seiten 501, 512 bis 514, 524, siehe Abb. 713 b, ist eine Hochfrequenzschweißanlage gemäß dem oberbegriff des Patenanspruchs 1 bekannt, bei der die Tabletts mit Hilfe einer Kette geführt werden. Es sind 2 Einlegestaionen, eine Arbeitsstation und eine Entnahmestation vorgesehen. In letzterer wird das Tablett nach der Entnahme gekippt und im freiem Rücklauf auf einer unterhalb der Zuführeinrichtung angeordneten schrägen Rücklaufschiene unter die erste Einlegestation transportiert. Hier wird das Tablett von der Transportkette der Zuführlinie erfaßt und auf einer bogenförmigen Bahn in die erste Einlegestation nach oben gebracht. Eine positionssichere Bewegung der relativ schweren und teuren Tabletts mit höherer Geschwindigkeit als die Zuführgeschwindigkeit kann durch diese bekannte Einrichtung in keiner ihrer Abschnitte realisiert werden. Auch besteht keine Möglichkeit, die Anzahl der teuren Tabletts wesentlich zu reduzieren.

Schließlich wird in der US-PS 2 027 165 eine Förderanlage für Formen von Puppenköpfen beschrieben, bei der die Formen mit konstanter Geschwindigkeit über verschiedene Transportsysteme geführt werden. Ein freies, schnelleres Rückschieben der Formenhälften bzw. der Tabletts ist nicht vorgesehen. Dadurch kann die Anzahl der teuren Tabletts auch insgesamt nicht reduziert werden.

Aufgabe der Erfindung ist, eine Hochfrequenzschweißanlage der eingangs genannten Art zu schaffen, die relativ einfach und zudem sehr flexibel in ihrem Aufbau ist und einen wirtschaftlicheren Transport der Tabletts bietet.

Diese Aufgabe wird durch eine Hochfrequenzschweißanlage mit den, Merkmalen des Anspruchs 1 gelöst.

Demgemäß besteht die erfindungsgemäße Anlage aus vier im wesentlichen gradlinigen Transporteinrichtungen, wobei jeweils zwei der vier Transporteinrichtungen zueinander parallel ausgerichtet sind. Dabei ist die erste Einrichtung die Zuführeinrichtung, die dritte, zu ersterer parallele Einrichtung, die Rückführ-Einrichtung, während die zweite und die vierte Transporteinrichtung jeweils als vertikaler Aufzug , bzw. als Lift-Anlage ausgebildet sind. Zudem weist zumindest die Rückführeinrichtung eine höhere Transportgeschwindigkeit auf als die Zuführeinrichtung. Hierdurch wird erreicht, daß die Tabletts, auf welchen die Werkstücke durch die einzelnen Stationen geführt werden, in einer einzigen Richtung durch alle Stationen hindurchgefördert und außerhalb der Arbeitsstationen in entgegengesetzter Transportrichtung in die Ausgangsstation zurückgeführrt werden. Zudem werden die beispielsweise am Ende der Zuführeinrichtung (1. Transporteinrichtung) angekommenen Tabletts von dem vertikalen Aufzug (2. Transporteinrichtung) erfaßt und auf die darunterliegende Rückführeinrichtung (3. Transporteinrichtung) gesetzt. Die von der Rückführeinrichtung zu dem nächsten Aufzug (4. Transporteinrichtung) gebrachten Tabletts werden vertikal in die Ausgangsstation hochgebracht, wo sie entladen werden, um anschließend durch die Zuführeinrichtung in die Beschickungsstation und danach durch sämtliche Arbeitsstationen hindurchgeführt zu werden.

Es ist selbstverständlich, daß die Rückführrichtung vertikal oberhalb als auch vertikal unterhalb der Zuführeinrichtung angeordnet sein kann. Es läßt sich jedoch erkennen, daß die Anordnung des Rückführteiles unterhalb der Rückführtung die vorteilhaftere Ausführungsweise ist, da die Anordnung oberhalb des Arbeitsniveaus störend wirken würde, sowohl in den Beschickungs- als auch in den Arbeitsstationen. Die Anordnung unterhalb der Arbeitsebene ist jedoch als optimale Anordung anzusehen, da der rückführende Transport unter den Arbeitstischen der Stationen verläuft und dieser Raum überwiegend ungenutzt ist.

Dadurch daß zumindest die Rückführeinrichtung mit einer viel höheren Geschwindigkeit läuft, als die Zuführeinrichtung kann beispielweise ein durch die vertikale Liftanlage (Aufzug) von der Zuführeinrichtung entnommenes Tablett relativ schnell auf die darunterliegende Rückführeinrichtung aufgelegt und sehr schnell zum gegenläufigen Aufzug und in die Ausgangsstation transportiert werden.

Dieser beschriebene Vorteil ist dadurch zu erreichen, daß die einzelnen Tabletts nicht fest mit den Transportsystem verbunden sind, sondern von den vier einzelnen Transporteinrichtungen einzeln erfasst und entsprechend einzeln geführt bzw. transportiert werden. Es ist somit keine feste Beabstandung der Tabletts vorhanden, welche eine konstante Geschwindigkeit erzwingen würde. Durch den bedeutend schnelleren Rücktransport ist zudem eine erhebliche Einsparung gegeben, da nicht mehr auf der gesamten Länge des Transportsystems in konstanter Beabstandung Tabletts befestigt sind. Hier werden nämlich eine relativ hohe Anzahl von verhältnis mäßig teueru Tabletts eingespart, ohne daß der Arbeitsrythmus beeinträchtigt würde.

Die erfindungsgemäße lineare Anordnung der Stationen, als auch die einzelne Anordnung der Tabletts auf den einzelnen Transporteinrichtungen des Transportsystems der Anlage erlaubt eine modulare Aufbauweise der gesamten Anlage. Die Anlage kann so ausgebildet sein, daß bei Umrüsten der Anlage auf die Fertigung eines anderen Werkstückes, welches mehrere Arbeitsgänge, also mehrere Arbeitsstationen benötigt, diese in gleicher Weise ausgerüsteten Stationen in relativ einfacher Weise in den Aufbau der Anlage aufgenommen und verkettet werden können. Es besteht folglich die Möglichkeit entweder gleich zu Beginn der Zusammenstellung der Anlage die einzelnen Module für die notwendigen Stationen auszuwählen und entsprechend zu verketten, oder mit geringer Modifikation im nachhinein die Anlage umzurüsten. Dabei können in dieser Modulbauweise auch speziell dafür entwickelte Handhabungs-Geräte oder auch am Markt erwerbares allgemein übliches Handhabungs-Gerät, welches für die Handhabung solcher Werkstücke geeignet ist, verwendet werden.

Zwar ist aus der DE-OS 21 52 654 ein Transportsystem bekannt, das ebenfalls aus vier unabhängig voneinander angetriebenen Transporteinrichtungen zusammengesetzt ist. Die zwei Aufzugseinheiten sind jedoch als Paternoster-Aufzüge ausgelegt, durch welche am Ende der Zuführeinrichtung ankommende Tabletts von dieser abgehoben und breitenversetzt in einer vertikal darunter befindlichen Ebene auf eine Rückführeinrichtung abgesetzt werden. Abgesehen von dem zeitaufwendigeren Abheben und wieder Absetzen der Tabletts von bzw. auf den entsprechenden Einrichtungen, benötigt dieser bekannte Aufbau somit eine größere bauliche Breite. Die Rückführeinrichtung des bekannten Transportsystems vermag Einzeltabletts mit einer bis zu zweifach höheren Geschwindigkeit als die Zuführgeschwindigkeit zu transportieren. Dies bedingt bei relativ langen Transporteinrichtungen bzw. Bearbeitungslinien eine entsprechende Verlängerung des Arbeitstaktes, wegen der großen Rücktransportdauer. Als Abhilfe wird eine Sperreinrichtung vorgeschlagen, die ein Verweilen von zwei oder mehreren Tabletts auf der Rückführeinrichtung ermöglichen soll, also praktisch ein Tablettstau zur Arbeitstaktverkürzung. Es befinden sich folglich bei diesem bekannten Transportsystem während eines Arbeitstaktes drei und mehr Paletten im unproduktiven, relativ langsamen Rücktransport, was sich bei den hohen Kosten eines Tabletts als sehr unwirtschaftlich auswirkt.

Nachfolgend wird die Erfindung anhand eines Ausführungsbeispieles unter Bezug auf die Zeichnung näher beschrieben.

Das in der Zeichnung dargestellte Ausführungsbeispiel zeigt eine erfindungsgemäße Hochfrequenz-Schweißanlage in einer Ausführung, bei welcher die Rückführeinrichtung vertikal unter der Zuführeinrichtung liegt zudem ist hier eine viergeteilte Transporteinrichtung vorhanden.

Die Anlage steht im wesentlichen auf einem Grundgerüst (1), welches eine obere Transporteinrichtung, nämlich die Zuführeinrichtung (2) und eine vertikal darunterliegende untere Transporteinrichtung, die Rückführeinrichtung (3) aufweist. An den beiden Enden der Zuführeinrichtung und der Rückführeinrichtung ist je ein diese beiden Einrichtungen verbindender Aufzug (4 bzw. 5) angeordnet.

Die Transporteinrichtung besteht des weiteren aus Tabletts (6), die durch die vier Transporteinrichtungen immer in jeweils gleicher Richtung transportiert werden. Einer jeden Station ist entlang der Zuführeinrichtung der Anlage ein Tablett (6) zugeordnet. So weist die dargestellte Anlage eine Ausgangsstation (7) auf, die gleichzeitig die obere Position des Aufzuges (5) sein kann. Die in Transportrichtung nächste Station (8) kann ihrerseits als Ausgangsstation angesehen werden oder als Beladestation, je nachdem ob in dieser Station erst fertige Werkstücke dem Tablett (6) entnommen werden, oder bereits von Hand Ausgangsmaterial für das fertige Werkstück auf das Tablett eingelegt wird.

Die nächste Station ist die eigentliche Beschickungs- oder Beladestation (9). Neben dieser Beladestation ist ein Stapel (10) mit Werkstücken angeordnet, welche mit Hilfe einer einseitig wirksamen Handhabungseinrichtung (11) dem Stapel entnommen und auf das Tablett der Beladestation aufgelegt werden.

Nach der Beladestation (9) ist eine Schweißstation (12) mit einer HF-Schweißeinrichtung (17) angeordnet, die in an sich bekannter Weise mit einem HF-Generator (13) gekoppelt ist.

Die in Zuführrichtung nächste Station ist hier eine Entnahmestation (14), aus welcher das Werkstück oder das Werkzeug mit darin befindlichem Werkstück von dem Tablett (6) abgehoben und seitlich weggebracht und auf ein zum Zuführband (2) paralleles Abführband (15) abgesetzt wird. Das leere Tablett (6) taktet weiter in die Oberseite des Aufzuges (4), der das Tablett auf die darunter liegende Rückführeinrichtung (3) setzt.

Der gesamten Anlage ist ein Schaltschrank (16) zugeordnet, über welchen sämtliche Funktionen der Anlage steuer- und kontrollierbar sind.

Die erfindungsgemäße HF-Schweißanlage funktioniert folgendermaßen.

Auf ein in der Beschickungsstation (8) befindliches Tablett (6) kann bereits einiges an Werkstückmaterial oder entsprechende Werkzeuge eingelegt werden. Dieses Tablett taktet in die nächste Station, die eigentliche Beladestation (9), in die mit Hilfe des Handhabungsgerätes (11) vom Werkstückstapel (10) beispielsweise ein Kunststofffolien-Zuschnitt abgehoben und auf das Tablett gesetzt wird. Im nächsten Takt wird das Tablett in die darauffolgende Schweißstation befördert, wo durch entsprechende, bekannte HF-Einrichtungen (17) die einzelnen Werkstückteile miteinander verschweißt werden. Nach Freigabe des Werkstückes aus der Schweißeinrichtung wird das Tablett in die nachfolgende Entnahmestation (14) befördert. Hier wird das Werkstück oder das Werkstück mit Deckelwerkzeug dem Tablett entnommen und auf ein parallel laufendes Abführband (15) gesetzt und von der Anlage zu weiteren, nicht mit der Anlage gekoppelten Einrichtungen geführt. Das leere Tablett gelangt in den Aufzug (4), welcher dieses vertikal nach unten befördert und auf die darunter befindliche Rückführeinrichtung (3) absetzt. Diese transportiert das Tablett mit erhöter Geschwindigkeit zu dem Aufzug (5) zurück, der das Tablett wieder vertikal hochhebt in die Position (7), wo es von der Zuführeinrichtung (3) erfaßt und danach wieder den vorhergehend beschriebenen Kreislauf eingebracht wird.

In anderer Funktionsweise wird das Werkstück nicht in der Entnahmestation (14) vom Tablett entfernt, sondern läuft mit dem Tablett über den Aufzug (4) und in rascher Rückführweise zum Aufzug (5) und durch diesen in die Station (7) zurück. In dieser Ausgangsstation wird dann das Werkstück von dem Tablett entfernt. Diese Funktionsweise hat die eingangs beschriebene vorteilhafte Auswirkung, daß geschweißte Werkstücke, welche eine längere Auskühlzeit benötigen, auf dem Tablett belassen und den ganzen Rückführweg beispielsweise in geschlossenem Deckelwerkzeug zurückgeführt werden und während dieser Zeit ausreichend auskühlen können.

**Bezugszeichenliste**

1. Grundgerüst
2. Zuführeinrichtung
3. Rückführeinrichtung
4. (Lift-Anlage) Aufzug
5. (Lift-Anlage) Aufzug
6. Tabletts
7. Ausgangsstation
8. Station
9. Beladestation
10. Werkstückstapel
11. Handhabungsgerät
12. Schweißstation
13. HF-Generator
14. Entnahmestation
15. Abführband
16. Schaltschrank
17. HF-Einrichtung

**Patentansprüche**

1. Hochfrequenzschweißanlage für die Verschweißung insbesondere von Kunststoffteilen, mit mindestens einer Schweißstation (12) und einer Beschickungsstation (8) und einer Entnahmestation (14), die in linearer Aufeinanderfolge angeordnet sind, mit einem Transportsystem, auf dem Tabletts (6) vorgesehen sind, wobei auf den Tabletts Werkstücke angeordnet sind, die Tabletts in einer einzigen Richtung den Stationen zuführbar sind und außerhalb der Stationen in entgegengesetzter Richtung in einer im wesentlichen vertikal versetzten Ebene in eine Ausgangsstation (7) zurückführbar sind, wobei beim Transport in beiden Richtungen die Tabletts immer mit der Arbeitsseite nach oben weisend angeordnet sind, dadurch gekennzeichnet, daß das Transportsystem aus vier voneinander unabhängigen, unterschiedlich antreibbaren und geradlinigen Transporteinrichtungen besteht, daß die erste Transporteinrichtung die Zuführeinrichtung (2) und die dritte parallel zur Zuführrichtung angeordnete Transporteinrichtung die Rückfuhreinrichtung (3) ist und daß die zweite und vierte Transporteinrichtung jeweils als vertikaler Aufzug (Lift 4, 5) ausgebildet sind, wobei die Rückführeinrichtung (3) und die Aufzüge (4, 5) eine höhere Transportgeschwindigkeit als die Zuführeinrichtung (2) aufweisen.

2. Hochfrequenzschweißanlage nach Anspruch 1, dadurch gekennzeichnet,daß die Zuführ- (2) und Rückführeinrichtung (3) der Transporteinrichtung modulartig erweiterbar ausgebildet sind.

**Claims**

1. A high frequency welding apparatus for the welding, in particular, of synthetic resin components, comprising at least one welding station (12) and one loading station (8) and one output station (14) which are arranged in a linear sequence, with a transport system on which are arranged trays (6), where workpieces are arranged on the trays, the trays can be conveyed to the stations in one single direction, and outside of the stations can be returned in the opposite direction, in a substantially vertically offset plane, to a starting station (7), wherein, in the case of transport in both directions, the trays are always arranged with the working side facing upwards, characterised in that the transport system comprises four rectilinear transport devices which are independent of one another and can be driven in different fashions, that the first transport device is the supply device (2) and the third transport device, which extends in parallel to the supply device, is the return device (3), and that the second and fourth transport devices each comprise vertical lifts (4, 5), where the return device (3) and the lifts (4, 5) possess a higher transport speed than the supply device (2).

2. A high frequency welding apparatus as claimed in Claim 1, characterised in that the supply device (2) and return device (3) of the transport device are designed so as to be extendible in modular fashion.

**Revendications**

1. Installation de soudage à haute fréquence pour le soudage notamment de pièces en matière plastique, comportant au moins un poste de soudage (12) et un poste de chargement (8) et un poste de prélèvement (14), qui sont disposés selon une succession linéaire, et comportant un système de transport sur lequel sont prévus des plateaux (6), et dans laquelle des pièces à traiter sont disposées sur les plateaux, les plateaux peuvent être amenés aux postes dans une seule direction et, en dehors des postes, peuvent être ramenés dans la direction inverse dans un poste de sortie (7), dans un plan essentiellement décalé verticalement, et dans laquelle, lors du transport dans les deux directions, les plateaux sont toujours disposés avec leurs surfaces de travail tournées vers le haut, caractérisé par le fait que le système de transport est constitué par quatre dispositifs de transport rectilignes, qui sont indépendants les uns des autres, et peuvent être entraînés différemment, que le premier dispositif de transport est le dispositif d'amenée (2) et que le troisième dispositif de transport disposé parallèlement à la direction d'amenée, est le dispositif de renvoi (3) et que les second et quatrième dispositifs de transport sont réalisés respectivement sous la forme d'élévateurs verticaux (élévateurs 4, 5), le dispositif de renvoi (3) et les élévateurs (4, 5) possédant une vitesse de transport supérieure à celle du dispositif d'amenée (2).

2. Installation de soudage à haute fréquence suivant la revendication 1, caractérisée par le fait que le dispositif d'amenée (2) et le dispositif de renvoi (3) du dispositif de transport peuvent être réalisés de manière à être étendus sous forme modulaire.